# FASCICULE DE BREVET EUROPEEN

(11) **EP 1 145 790 B1**
(45) Date de publication et mention de la délivrance du brevet: **07.09.2005**
(21) Numéro de dépôt: 01400514.4
(22) Date de dépôt: 28.02.2001
(51) Int. Cl.: B23B 31/40

(54) **Mandrin expansible de haute précision à serrage cylindrique ou compensé**
Hochpräzisions-Spannzangenfutter mit zylindrischem Spannen
High precision expanding mandrel with cylindrical clamping

(30) Priorité: 13.03.2000 FR 0003163
(43) Date de publication de la demande: 17.10.2001
(73) Titulaire: SANDVIK TOBLER S.A., F-95380 Louvres (FR)
(72) Inventeur: Barbieux, Jacques, 95380 Louvres (FR)
(74) Mandataire: Lepeudry-Gautherat, Thérèse

(56) Documents cités:
- EP-A- 0 263 982
- FR-A- 2 166 564
- US-A- 1 427 155
- US-A- 2 870 686
- US-A- 3 017 192
- US-A- 4 496 163

## Description

La présente invention concerne un mandrin expansible, c'est-à-dire un mandrin destiné à serrer une pièce à usiner (fraisage, tournage, rectification) en pressant une partie expansible du mandrin sur les parois d'un alésage axial aménagé dans ladite pièce. Les mandrins expansibles sont habituellement assujettis sur la face antérieure d'une broche machine à l'aide d'un écrou de fixation.

On connaît un premier type de mandrin expansible, dont le corps ("arbre de mandrin") comporte une partie antérieure ayant, avant le serrage, la forme d'un cylindre creux muni de plusieurs fentes longitudinales. L'expansion de cette partie fendue est obtenue en faisant coulisser le long de l'axe de cette dernière une tige à tête conique, de sorte que la partie fendue prend au cours du serrage une forme conique d'angle au sommet de plus en plus important. Quand on monte ce mandrin sur la broche machine, on visse la partie postérieure de la tige à tête conique sur un tirant que l'on peut faire coulisser le long de l'axe de la broche machine pour commander le serrage ou le desserrage de la pièce à usiner.

Ce type de mandrin est relativement simple à fabriquer, et peu coûteux, mais il présente plusieurs inconvénients. D'abord, l'expansion de la partie fendue de l'arbre de mandrin est conique, cependant que la tige à tête conique n'est pas guidée par l'arbre : il en résulte que l'expansion de la partie fendue est irrégulière, ce qui fait que le serrage manque de précision. Ensuite, la partie fendue de l'arbre manque de rigidité et risque de se déformer ou même de se casser quand on actionne le mécanisme de serrage en présence, ou pire, en l'absence, d'une pièce à usiner ; on ne peut alors remplacer la partie défectueuse qu'en remplaçant le mandrin tout entier. Enfin, le diamètre de serrage caractérisant chaque mandrin est unique, à un usinage de finition près, ce qui fait que l'utilisateur est contraint de changer de mandrin quand il doit usiner une pièce dont l'alésage présente un diamètre suffisamment différent de la pièce précédente. Ces inconvénients causent évidemment une perte de temps et des surcoûts importants.

Selon un second type de mandrin classique (d'ailleurs fabriqué par la Demanderesse de la présente invention), l'arbre présente une partie antérieure de forme conique pointant vers l'avant. A l'inverse donc du mandrin décrit précédemment, c'est ici la partie expansible qui coulisse axialement pour effectuer le serrage ou le desserrage. Cette partie expansible est constituée d'une bague munie de fentes longitudinales ("la douille"), qui présente, au moins sur sa partie postérieure, une paroi interne ayant la forme d'un cône dont l'angle au sommet est égal à celui du cône sur lequel la douille coulisse. La surface externe de la douille demeure donc rigoureusement cylindrique au cours de son expansion, assurant ainsi un serrage parfaitement précis et uniforme. De plus, il n'existe aucun risque de rupture ou de déformation inélastique de la douille quand on la fait coulisser, en présence ou en l'absence d'une pièce à usiner. Enfin, pour passer d'une pièce à une autre de diamètre d'alésage différent, il suffit de changer la douille (avec, le cas échéant, la partie du mécanisme d'entraînement attachée à la douille), et non le mandrin tout entier.

On peut d'ailleurs distinguer de manière générale, dans le cadre de ce second type de mandrin classique, deux genres de mécanismes d'entraînement, selon que la douille est entraînée au niveau de sa partie antérieure ou de sa partie postérieure. Les dispositifs d'entraînement par l'arrière conviennent bien pour des diamètres de serrage assez faibles (disons, inférieurs à 15 mm), mais ils sont tous excessivement encombrants aux larges diamètres de serrage car ils sont attachés à la douille sur sa périphérie. Les dispositifs d'entraînement par l'avant utilisent un piston qui est guidé avec précision dans un alésage cylindrique aménagé selon l'axe de l'arbre de mandrin dont il dépasse vers l'avant, les extrémités antérieures dudit piston et de la douille étant fixées l'une à l'autre. Ces dispositifs d'entraînement par l'avant offrent à la douille un soutien intérieur robuste sur la partie postérieure de la douille (puisque cette partie postérieure est en appui sur la partie conique de l'arbre), mais n'offrent pas, dans les réalisations connues, un soutien intérieur robuste sur toute la longueur de la douille ; cette (relative) fragilité peut s'avérer particulièrement gênante quand la douille est mise au contact de la pièce à serrer seulement sur la partie antérieure de la douille, comme on est parfois contraint de le faire quand l'alésage de la pièce à serrer est peu profond ("serrage court").

La présente invention a donc pour but de proposer un mandrin expansible assurant un serrage à la fois précis et robuste, quelle que soit la longueur de serrage.

Un autre but de la présente invention est de proposer un mandrin expansible peu encombrant, quel que soit le diamètre de serrage.

Un autre but encore de la présente invention est de proposer un mandrin expansible permettant un changement de douille rapide, de manière à ce que l'on puisse, en utilisant le même corps de mandrin, passer en peu de temps d'une pièce à serrer à une autre de diamètre d'alésage différent.

Ces buts sont atteints par un mandrin expansible comprenant un arbre dont l'extrémité antérieure a la forme d'un tronc de cône pointant vers l'avant, une douille expansible constituée d'une bague munie de fentes longitudinales destinée à coulisser sur ladite extrémité antérieure conique, et un piston qui est guidé dans un alésage cylindrique aménagé selon l'axe de l'arbre de mandrin dont il dépasse antérieurement, le coulissement dudit piston entraînant ladite douille de manière à commander le serrage ou le desserrage sur ledit mandrin d'une pièce à usiner. Selon l'invention, l'extrémité antérieure du piston a la forme d'un tronc de cône pointant vers l'arrière, et la paroi interne de la douille a la forme de deux troncs de cône successifs orientés tête-bêche, l'angle au sommet du cône antérieur de la douille, qui est apte à épouser ledit cône du piston, étant supérieur à l'angle au sommet du cône postérieur de la douille, qui est apte à épouser ledit cône de l'arbre.

Selon des caractéristiques particulières, la partie cylindrique et la partie tronconique du piston sont séparées par un élément apte à coopérer avec une élément séparant les deux parties coniques de la paroi interne de la douille.

Selon des caractéristiques supplémentaires, le piston est apte à être vissé à l'arrière, en insérant un tournevis dans un logement frontal correspondant prévu sur le piston, sur une tirette coulissant axialement dans ledit alésage de l'arbre.

Selon des caractéristiques particulières, on a percé transversalement dans ladite tirette un alésage fileté traversant dans lequel on peut introduire une vis d'arrêt passant soit par un trou oblong, soit par un trou de diamètre correspondant à ladite vis d'arrêt, ces deux trous étant aménagés dans la partie postérieure de l'arbre à des endroits diamétralement opposés.

D'autres avantages, buts et caractéristiques de la présente invention ressortiront de la description ci-dessous d'un mode de réalisation de l'invention présenté à titre d'exemple, ladite description s'appuyant sur les figures annexées, dans lesquelles :

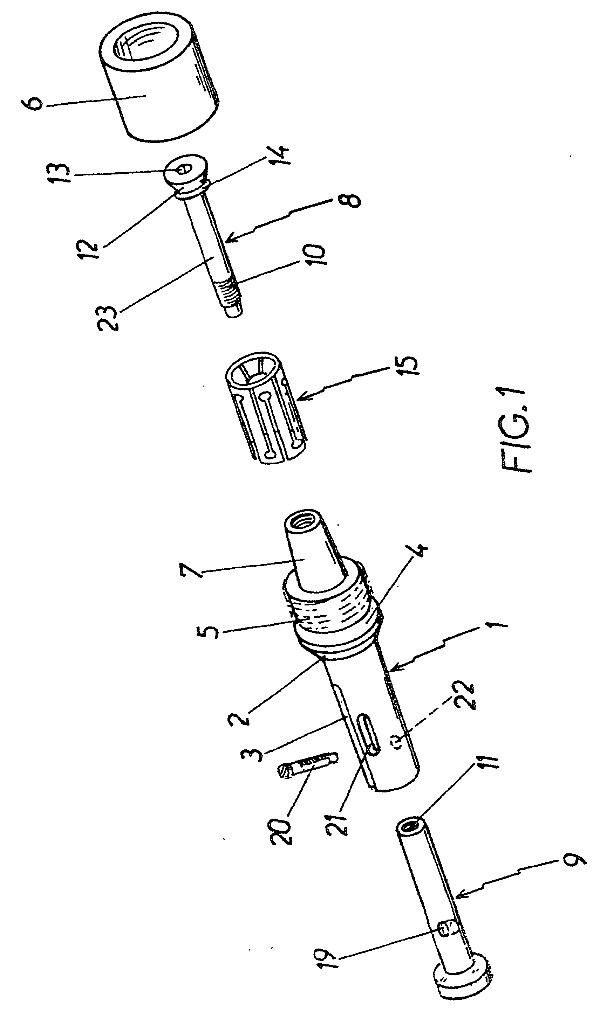

la figure 1 est une vue en perspective éclatée d'un mandrin expansible selon l'invention,
la figure 2 est une coupe longitudinale montrant un premier mode d'utilisation du mandrin illustré sur la figure 1, et
la figure 3 est une coupe longitudinale montrant un second mode d'utilisation du mandrin illustré sur la figure 1.

On peut voir sur les figures un mandrin comprenant un corps de mandrin ("arbre") 1, dont la partie postérieure est destinée à être insérée dans l'alésage d'une broche machine (non représentée). Les figures montrent à titre d'exemple le mode de fixation connu sous le nom de "norme W" : ledit alésage de broche présente à son extrémité antérieure un évasement conçu pour recevoir le cône médian 2 de l'arbre 1, ainsi qu'une saillie conçue pour se loger dans une rainure longitudinale 3 aménagée dans la partie postérieure cylindrique de l'arbre 1 de façon à déterminer l'orientation du mandrin lors de son insertion dans cet alésage. Il va de soi que la présente invention est indépendante du mode de fixation du mandrin sur la broche machine, qui pourrait tout aussi bien être du type cône SA, cône métrique, cône morse queue, ou autre.

En progressant vers l'avant sur l'arbre 1, on trouve d'abord une collerette 4 destinée à venir en appui sur la broche machine, puis une partie cylindrique 5 filetée sur laquelle on peut visser un cylindre creux 6, fileté intérieurement, qui sert de butée axiale lors du chargement de la pièce à serrer (non représentée) ; la longueur de cette butée 6 sera donc choisie en fonction des cotes des pièces à usiner. Enfin, l'arbre 1 se termine par un tronc de cône 7 pointant vers l'avant.

L'arbre est percé le long de son axe d'un alésage traversant comportant deux parties, la partie antérieure ayant un diamètre inférieur à celui de la partie postérieure. Un piston 8 coulisse dans la partie antérieure, et une tirette 9 dans la partie postérieure, le piston 8 pouvant se visser dans la tirette 9 à l'aide de filetages respectifs 10 et 11.

Le piston 8, qui a naturellement la forme d'un cylindre 23 à l'arrière, se termine à l'avant par une tête de vis tronconique 12 possédant un logement frontal 13 apte à recevoir un tournevis. La partie cylindrique 23 et la partie tronconique 12 du piston 8 sont séparées par une collerette 14.

En actionnant le piston 8, on peut faire coulisser une douille 15 vers l'arrière ou vers l'avant le long du cône antérieur 7 de l'arbre 1 selon que l'on souhaite, respectivement, serrer ou desserrer une pièce à usiner. Cette douille 15 présente extérieurement l'aspect d'une bague entaillée de plusieurs fentes longitudinales. Quant à la paroi interne de la douille 15, elle a la forme de deux troncs de cône successifs 17 et 18 orientés tête-bêche et séparés par une gorge 16. Quelle que soit la position du piston 8, le cône antérieur 18 de la douille 15 épouse étroitement la tête de vis conique 12, et le cône postérieur 17 de la douille épouse étroitement le cône 7 de l'arbre 1, de sorte que la douille 15 est amenée à changer de diamètre en maintenant la forme parfaitement cylindrique de sa surface externe, ce qui assure un serrage tout à fait uniforme.

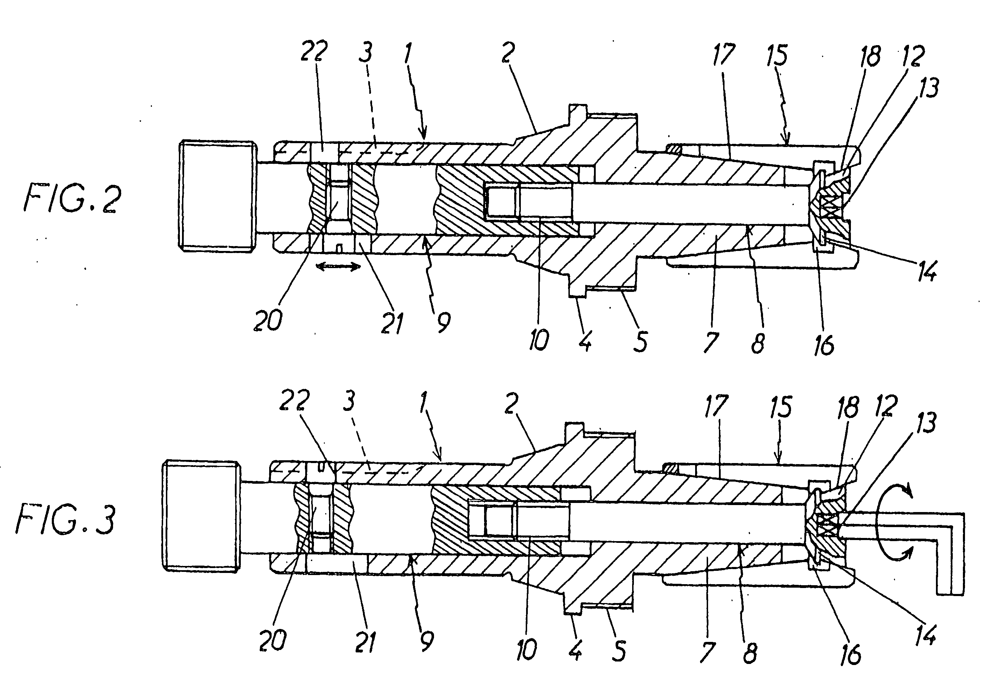

La collerette 14 pénètre dans la gorge 16 de la douille (on pourrait d'ailleurs aussi bien, sans sortir du cadre de l'invention, prévoir à l'inverse une collerette sur la surface interne de la douille, et une gorge sur le piston). Comme le montrent les figures 2 et 3, l'angle au sommet du cône antérieur 18 est de préférence nettement supérieur à celui du cône postérieur 17, de sorte que, en utilisation, le déplacement relatif du piston 8 par rapport à la douille 15 (mesurable par la translation de la collerette 14 dans la gorge 16), est nettement inférieur au déplacement de la douille 15 par rapport à l'arbre 1. Cela permet de donner à la gorge 16 une dimension longitudinale faible par rapport à la longueur de la douille 15.

L'invention atteint ainsi l'objectif de robustesse mentionné en introduction : on voit en effet que, grâce au profil interne à double cône de la douille selon l'invention, cette dernière est soutenue au serrage (par le cône 7 de l'arbre 1 et le cône 12 du piston guidé 8) sur toute sa longueur, à l'exception de la zone relativement étroite de la gorge 16. L'homme du métier pourrait même envisager de supprimer complètement ce couplage par gorge et collerette ; cependant, ce couplage est utile, particulièrement dans le cas où l'on souhaite utiliser des angles au sommet assez petits pour les cônes 17 et 18, car sans lui la douille 15 risquerait de rester coincée sur l'arbre 1 au desserrage (les petits angles au sommet présentent l'avantage qu'avec une traction relativement faible sur la tirette, on produit une force de serrage relativement importante).

On notera également que cette robustesse du dispositif de serrage selon l'invention a été obtenue tout en offrant une précision de serrage optimale (de l'ordre du centième de millimètre).

Un avantage supplémentaire du mandrin selon l'invention est qu'il permet d'utiliser, aux fins d'économie, au lieu d'une douille à double cône selon l'invention, la douille classique à simple cône entraînée par l'avant décrite en introduction. Cette option représente naturellement un compromis où l'on perd en robustesse, mais elle est particulièrement intéressante dans le cas d'un "serrage court" ne mettant en contact que la partie postérieure (en appui sur le cône de l'arbre) de la douille, mais également dans le cas d'un "serrage long" car le porte-à-faux causé par le manque de soutien de la douille à simple cône dans sa partie antérieure est relativement peu gênant quand la douille vient au contact de la pièce à serrer sur une grande longueur.

Un autre avantage supplémentaire du mandrin selon l'invention est qu'il permet de changer rapidement de douille. En effet, il suffit pour ce faire d'insérer un tournevis dans le logement frontal 13 du piston 8, et de dévisser le piston 8 de la tirette 9 ; il ne reste alors plus qu'à visser un nouvel ensemble douille-piston sur la tirette 9 (on peut, si on le souhaite, désolidariser le piston 8 de la douille 15 en dilatant fortement cette dernière, mais ce n'est pas conseillé car, outre la perte de temps qu'elle implique, cette opération risque d'endommager la douille).

De plus, et afin de permettre l'utilisation du mandrin expansible selon l'invention avec divers types de broches machine, on a prévu deux modes de fonctionnement, un mode "automatique" et un mode "manuel". Le premier concerne les broches comportant une tige de commande sur laquelle on peut fixer la tirette 9 ; on limitera alors les déplacements de celle-ci en introduisant dans un alésage fileté traversant 19 dont elle est munie une vis d'arrêt 20 qui passe par un trou oblong 21 aménagé dans la partie postérieure de l'arbre 1 (voir la figure 2). Dans le cas des broches machine n'offrant pas cette possibilité de commande automatique, on fonctionnera en mode "manuel" : il suffit pour cela d'introduire ladite vis d'arrêt 20 dans un trou 22 de diamètre correspondant aménagé dans la partie postérieure de l'arbre 1 en position diamétralement opposée au trou oblong 21, puis dans l'alésage 19 (à l'extrémité de celui-ci opposée à l'extrémité utilisée dans le mode "automatique") ; le coulissement de la tirette 9 est alors bloqué, et le déplacement du piston 8 pour le serrage ou le desserrage est obtenu simplement en vissant ou dévissant le piston 8 dans la tirette 9, au moyen d'un tournevis inséré dans le logement frontal 13 (voir la figure 3).

Le mode de réalisation de l'invention décrit ci-dessus a été présenté en tant qu'exemple illustrant les principes de la présente invention, mais il est bien clair que l'homme de l'art pourra s'en inspirer pour réaliser d'autres variantes sans pour autant sortir de l'invention. Rien n'empêche par exemple d'effectuer des "serrages compensés" au moyen du mandrin selon l'invention : cela concerne les alésages de pièce ayant une forme légèrement conique, pour lesquels on utilisera une douille adéquate, c'est-à-dire une douille présentant, au lieu de la surface externe cylindrique décrite précédemment, une surface conique correspondant audit alésage de pièce ; on obtiendra ainsi, dans ces cas également, un serrage à la fois robuste et précis.

## Revendications

1. Mandrin expansible, comprenant un arbre (1) dont l'extrémité antérieure a la forme d'un tronc de cône (7) pointant vers l'avant, une douille expansible (15) constituée d'une bague munie de fentes longitudinales destinée à coulisser sur ladite extrémité antérieure conique (7), et un piston (8) qui est guidé dans un alésage cylindrique aménagé selon l'axe de l'arbre de mandrin (1) dont il dépasse antérieurement, le coulissement dudit piston (8) entraînant ladite douille (15) de manière à commander le serrage ou le desserrage sur ledit mandrin d'une pièce à usiner, **caractérisé en ce que** l'extrémité antérieure du piston (8) a la forme d'un tronc de cône (12) pointant vers l'arrière, et **en ce que** la paroi interne de la douille (15) a la forme de deux troncs de cône successifs (17, 18) orientés tête-bêche, l'angle au sommet du cône antérieur (18) de la douille (15), qui est apte à épouser ledit cône (12) du piston, étant supérieur à l'angle au sommet du cône postérieur (17) de la douille (15), qui est apte à épouser ledit cône (7) de l'arbre.

2. Mandrin expansible selon la revendication 1, **caractérisé en ce que** la partie cylindrique (23) et la partie tronconique (12) du piston sont séparées par un élément (14) apte à coopérer avec une gorge (16) séparant les deux parties coniques (17,18) de la paroi interne de la douille (15)

3. Mandrin expansible selon la revendication 1, comportant un piston (8) apte à être vissé par l'arrière sur une tirette (9) coulissant axialement dans un alésage de l'arbre (1), ladite tirette étant percée transversalement d'un alésage fileté traversant (19) dans lequel on peut introduire une vis d'arrêt (20) passant par un trou, **caractérisé en ce que** ledit trou est soit un trou oblong (21), soit un trou (22) de diamètre correspondant à ladite vis d'arrêt (20), ces deux trous (21, 22) étant aménagés dans la partie postérieure de l'arbre (1) à des endroits diamétralement opposés.

## Patentansprüche

1. Expansionsspannfutter mit einem Dom (1), dessen vorderes Ende die Form eines nach vorn weisendes Kegelstumpfs (7) hat, einer mit Längsschlitzen versehenen ringförmigen Expansionshülse (15), verschiebbar auf dem genannten kegelstumpfförmigen vorderen Ende (7), und einem Kolben (8), geführt in einer gemäß der Achse des Futterdoms (1) verlaufenden zylindrischen Bohrung, aus welcher er nach vom herausragt, wobei bei der Verschiebung des genannten Kolbens (8) die genannte Hülse (15) derart mitgeführt wird, dass man das Spannen oder Abspannen eines in dem genannten Spannfutter zu bearbeitenden Werkstücks steuern kann,
**dadurch gekennzeichnet, dass** das vordere Ende des Kolbens (8) die Form eines nach hinten weisenden Kegelstumpfs (12) hat, und **dadurch**, dass die Innenwand der Hülse (15) die Form zweier aufeinanderfolgender, entgegengesetzt ausgerichteter Kegelstümpfe (17, 18) hat, wobei der Spitzenwinkel des vorderen Kegelstumpfs (18) der Hülse (15), welcher dem genannten Kegelstumpf (12) des Kolbens angepasst ist, größer ist als der Spitzenwinkel des hinteren Kegelstumpf (17) der Hülse (15), welcher dem genannten Kegelstumpf (7) des Doms angepasst ist.

2. Expansionsspannfutter nach Anspruch 1, **dadurch gekennzeichnet, dass** der zylindrische Teil (23) und der kegelstumpfförmige Teil (12) des Kolbens durch ein Element (14) getrennt werden, das mit einer Ringnut (16) kooperiert, welche die beiden konischen Teile (17, 18) der Innenwand der Hülse (15) trennt.

3. Expansionsspannfutter nach Anspruch 1, einen Kolben (8) umfassend, dessen hinteres Ende in eine Zugeinrichtung (9) geschraubt ist, die axial in einer Bohrung des Doms (1) gleitet, wobei die genannte Zugeinrichtung eine quergerichtete gewindete Durchgangsbohrung (19) aufweist, in die man durch ein Loch hindurch eine Arretierungsschraube (20) hineinschrauben kann,
**dadurch gekennzeichnet, dass** das genannte Loch entweder ein Langloch (21) oder ein Loch (22) mit einem der Arretierungsschraube (20) entsprechenden Durchmesser ist, wobei sich diese beiden diametral entgegengesetzt angeordneten Löcher (21, 22) im hinteren Teil des Doms (1) befinden.

## Claims

1. An expansion mandrel, comprising a shaft (1) whose front end has the shape of a truncated cone (7) pointing forwards, an expansion sleeve (15) consisting of a ring with longitudinal slots intended to slide onto the said conical front end (7), and a piston (8) which is guided in a cylindrical bore made along the axis of the mandrel shaft (1) beyond which it protrudes in the forward direction, the sliding of the said piston (8) operating the said sleeve (15) so as to control the tightening or loosening on the said mandrel of a workpiece, **characterized in that** the front end of the piston (8) has the shape of a truncated cone (12) pointing rearwards, and **in that** the inner wall of the sleeve (15) has the shape of two successive truncated cones (17, 18) oriented head to tail, the apex angle of the front cone (18) of the sleeve (15), which is capable of fitting the shape of the said cone (12) of the piston, being greater than the apex angle of the rear cone (17) of the sleeve (15), which is capable of fitting the shape of the said cone (7) of the shaft.

2. An expansion mandrel according to Claim 1, **characterized in that** the cylindrical portion (23) and the truncated cone portion (12) of the piston are separated by an element (14) capable of interacting with a groove (16) separating the two conical portions (17, 18) of the inner wall of the sleeve (15).

3. An expansion mandrel according to claim 1, comprising a piston (8) capable of being screwed from the rear onto a pull handle (9) sliding axially in a bore of the shaft (1), the said pull handle being pierced transversely with a through threaded bore (19) into which can be inserted a set screw (20) passing through a hole, **characterized in that** the said hole is either an oblong hole (21) or a hole (22) whose diameter corresponds to the said set screw (20), these two holes (21, 22) being made in the rear portion of the arbor (1) in diametrically opposed locations.
